# EUROPÄISCHE PATENTANMELDUNG

(11) **EP 0 529 579 A1**
(43) Veröffentlichungstag der Anmeldung: **03.03.1993**
(21) Anmeldenummer: 92114449.9
(22) Anmeldetag: 25.08.1992
(51) Int. Cl.: F24J 2/10, G02B 5/08

(54) **Solarspiegel, Verfahren zu dessen Herstellung und seine Verwendung**

(30) Priorität: 29.08.1991 DE 4128645
(71) Anmelder: FLACHGLAS AKTIENGESELLSCHAFT, D-90762 Fürth (DE)
(72) Erfinder: Susemihl, Ingo, Dipl.-Ing., W-5216 Niederkassel 2 (DE); Paul, Thomas, Dr. Dipl.-Phys., W-4690 Herne (DE)

(57) **Zusammenfassung**

Die Erfindung betrifft einen Spiegel für Anlagen zur Nutzung der Sonnenenergie, mit einem Träger 1 aus absorptionsarmem Flachglas und einer rückseitigen hochreflektierenden Silber-Reflexionsschicht 2, die mit einer Schutzschicht 3 versehen ist, ein Verfahren zu dessen Herstellung sowie seine Verwendung. Um diesen Spiegel auch für die solarchemische Energiegewinnung nutzbar zu machen und die Energieausbeute insgesamt zu verbessern, wird erfindungsgemäß der Träger 1 auf seiner Vorderseite mit einer hochbrechenden dielektischen UV-Reflexionsschicht 4 mit einer solchen Dicke versehen, daß sie als reflexionserhöhende Interferenzschicht für den nahen UV-Bereich wirkt.

## Beschreibung

Die Erfindung betrifft einen Spiegel für Anlagen zur Nutzung von Sonnenenergie, mit einem Träger aus absorptionsarmem Flachglas und einer rückseitigen hochreflektierenden Silber-Reflexionsschicht, die mit einer Schutzbeschichtung versehen ist, ein Verfahren zu dessen Herstellung und seine Verwendung.

Ein solcher Spiegel ist zum Beispiel aus der DE-A 30 04 353 bekannt. Der dort beschriebene Glasträger ist übliches Flachglas, das zur Verringerung der Energieabsorption besonders dünn ausgeführt wird. In der Praxis wird alternativ hierzu für den Träger absorptionsarmes Flachglas, sogenanntes Weißglas, verwendet, das gegenüber üblichem Floatglas über einen stark reduzierten Eisengehalt verfügt. Dieses Weißglas, das anders als das leicht grünliche normale Flachglas in der Durchsicht sehr farbneutral (weiß) ist, absorbiert weniger Energie im Bereich des sichtbaren Lichts und im Infraroten und verfügt dadurch über einen erhöhten Solarenergie-Transmissionsgrad. Mit Spiegeln eines solchen Aufbaus werden Reflexionsgrade für Sonnenenergie von über 90% erreicht.

Spiegel des gattungsgemäßen Aufbaus bieten eine Reihe von Vorteilen gegenüber anderen bekannten Solarspiegeln. Die Verwendung einer Silberschicht als Reflexionsschicht führt zu Wirkungsgraden bei der Nutzung von Sonnenenergie in solarthermischen Anlagen, die mit keinem anderen Material erreicht werden können. Der Nachteil der relativ großen Empfindlichkeit der Silberschicht gegen Abrieb und Korrosion wird dadurch behoben, daß die Silberschicht auf der Rückseite des Trägers angeordnet und mit einer üblicherweise aus einer Kupferschicht sowie einer Lackierung bestehenden Schutzbeschichtung abgedeckt wird.

Alternativ oder ergänzend hierzu kann auf der Rückseite des versilberten Glasträgers in bekannter Weise eine zusätzliche Platte aus Glas, Metall, glasfaserverstärktem Kunststoff oder dergleichen vorgesehen werden, wenn dies zum Schutz der Silberschicht oder zur Stabilisierung des Spiegels gewünscht wird.

Durch die Verwendung von anorganischem Glas als Träger des Solarspiegels können Standzeiten von 20 Jahren und mehr auch unter extremen Klimabedingungen erreicht werden, wobei der Glasträger - anders als Kunststoffträger - keines Schutzes vor dem UV-Anteil der Sonnenstrahlung bedarf.

Spiegel der vorgenannten Art werden in zunehmendem Maße zur großtechnischen Nutzung der Sonnenergie in solarthermischen Anlagen eingesetzt. Ein Anwendungsfall sind die sogenannten Rinnenkraftwerke, bei denen zylindrisch gebogene Parabolspiegel die Sonnenenergie auf entlang der Brennlinie angeordnete Rohre konzentrieren, in denen ein Wärmeträger zirkuliert, der die aufgenommene Wärme zu einer Generatorstation transportiert, wo sie zur Stromerzeugung genutzt wird.

Eine andere Anwendung sind Turmkraftwerke, bei denen eine Vielzahl planer Spiegel die Sonnenenergie auf einen "heißen Puntk" auf einem Turm richten, von wo die Wärme über einen Hochtemperaturwärmeträger wie Natrium abgeführt und ebenfalls zur Stromerzeugung eingesetzt wird.

Der Wirkungsgrad von solarthermischen Anlagen ist selbst bei optimaler Ausnutzung der Sonnenenergie aus thermodynamischen Gründen begrenzt. Es wäre daher wünschenswert, die Sonnenstrahlen direkt, das heißt ohne den Umweg über Prozeßwärme, einer Nutzung zuzuführen. Eine Möglichkeit hierfür bieten chemische Prozesse. Bei der sogenannten solarchemischen Nutzung der Sonnenenergie kann man im wesentlichen drei Kategorien von chemischen Prozessen unterscheiden:
1. Erzeugung von Energieträgern, z.B. Wasserstoff, Synthesegas , Ammoniak, Methanol, Aluminium.
2. Erzeugung von Grundstoffen, z.B. Kalzinieren von Kalkstein, Reduktion von Erzen, Entsalzung von Wasser, Produktion von Kohlenstoffasern, von Nylon, von Vitamin D.
3. Strahlungsinduzierte Reaktionen, z.B. die Behandlung von Oberflächen (Legierungsbildung), die Zersetzung giftiger Substanzen, usw.

Wie bei solarthermischen Anlagen muß bei solarchemischen Anlagen die Energiedichte nach Möglichkeit erhöht werden, z.B. durch parabolförmig gebogene Spiegel. Dabei kommt es für die genannten solarchemischen Prozesse darauf an, daß die Reflektoren vor allem im kurzwelligen Bereich des Sonnenspektrums über einen hohen Reflexionsgrad verfügen. Der Grund hierfür liegt darin, daß zum einen eine Reihe von chemischen Prozessen überhaupt nur dann ablaufen, wenn ein genügend großer Anteil hochenergetischer, das heißt kurzwelliger Strahlung vorhanden ist. Zum anderen nimmt die thermodynamische Qualität der elektromagnetischen Strahlung zu, je kürzer die Wellenlänge der Strahlung ist.

Es wurde bereits versucht, Solarspiegel für solarchemische Prozesse zur Verfügung zu stellen, die im Vergleich zum rückseitig versilberten Glasspiegel der gattungsgemäßen Art einen erhöhten Reflexionsgrad im UV-Bereich aufweisen. Bei diesen Spiegeln verwendet man für die Reflexionsschicht Aluminium, das anders als Silber im UV-Bereich einen hinreichend hohen Reflexionsgrad besitzt. Um zu vermeiden, daß der UV-Anteil der Sonnenstrahlung bereits vor dem Erreichen der Aluminiumschicht im Glas absorbiert wird, muß bei diesen Spiegeln die Aluminiumschicht auf der Vorderseite des Trägers angebracht werden.

Zwar wird mit einer solchen Anordnung der Reflexionsgrad im UV-Bereich tatsächlich erhöht. Allerdings verschlechtert die vorderseitige Anordnung der Aluminiumschicht die Alterungsbeständigkeit und Kratzfestigkeit des Solarspiegels, selbst dann, wenn die Aluminiumschicht mit einer dielektrischen Schutzschicht abgedeckt wird. Eine solche Schutzschicht erzeugt darüber hinaus bei üblichen und notwendigen Schichtdicken u.a. unerwünschte interferenzbedingte Verminderungen des Reflexionsgrads der Aluminiumschicht in einzelnen Spektralbereichen. Ein weiterer Nachteil ist der gegenüber Silber um mehrere Prozent niedrigere gesamte solare Reflexionsgrad von Aluminium.

Der Erfindung liegt daher die Aufgabe zugrunde, einen Spiegel der gattungsgemäßen Art dahingehend weiterzubilden, daß ein deutlich erhöhter Reflexionsgrad im für solarchemische Anwendungen besonders bedeutsamen nahen UV-Bereich erzielt wird, ohne dadurch den Reflexionsgrad im sichtbaren Spektralbereich sowie für IR-Strahlung nennenswert zu reduzieren. Der Spiegel soll wirtschaftlich herstellbar sein und über eine lange Lebensdauer verfügen.

Diese Aufgabe wird gelöst durch einen Spiegel nach dem Kennzeichnungsteil von Anspruch 1. Vorteilhafte Weiterbildungen sind Gegenstand der Ansprüche 2 - 6. Ein bevorzugtes Verfahren zur Herstellung gebogener Spiegel nach der Erfindung ist Gegenstand der Ansprüche 7 - 9. Erfindungsgemäße Spiegel werden mit besonderem Vorteil eingesetzt zur Nutzung von Sonnenenergie mittels chemischer Umwandlungsprozesse (Anspruch 10).

Zwar ist es grundsätzlich bekannt, dielektrische Schichten wie TiO₂ für Solarspiegel zu verwenden (EP-B 0 024 900). Sie dienen dort jedoch lediglich dem Alterungsschutz der dort vorzugsweise auf der Vorderseite des Trägers angeordneten Spiegelschicht aus Aluminium oder Silber. Die vorteilhaften Eigenschaften eines Solarspiegels mit einem Aufbau nach der Erfindung mit rückseitiger Anordnung der Silber-Spiegelschicht und vorderseitiger Anordnung einer UV-Reflexionsschicht definierter Dicke wurden bisher offenbar nicht erkannt.

Als überraschend ist zu bewerten, daß das Vorsehen einer auf den nahen UV-Bereich abgestimmten Interferenzschicht auf der Vorderseite des Spiegelträgers den Reflexionsgrad des Spiegels im sichtbaren Spektralbereich und im Infrarotbereich nicht reduziert und damit durch die Erfindung der bereits extrem hohe Reflexionsgrad des gattungsgemäßen Spiegels für den gesamten Wellenlängenbereich des Sonnenenergiespektrums noch weiter erhöht wird. Dabei ist für die Verwendung des erfindungsgemäßen Spiegels für solarchemische Prozesse die Erhöhung des Reflexionsgrades im nahen UV-Bereich auf 40% und mehr von besonderer Bedeutung.

Wird für die vorderseitige UV-Reflexionsschicht TiO₂ verwendet, so führt dies zu einer besonders hohen Alterungsbeständigkeit des Spiegels sowie wegen des besonders hohen Brechungsindexes von TiO₂ zu einer beachtlichen Erhöhung des Reflexionsgrades im nahen UV-Bereich. Beim Aufbringen der TiO₂-Schicht ist darauf zu achten, daß zur Reduzierung des UV-Absorptionsgrads eine möglichst vollständige Oxidation zum stöchiometrischen Oxid stattfindet.

Der erfindungsgemäße Spiegel ist wirtschaftlich herstellbar, da zur Erhöhung des Reflexionsgrades im nahen UV-Bereich lediglich eine weitere dünne Schicht auf den rückseitig verspiegelten Glasträger aufgebracht weden muß. Geschieht dies mittels der für die quasi-kontinuierliche Großflächenbeschichtung weit verbreiteten Magnetron-Kathodenzerstäubung, so sind äußerst niedrige Zusatzkosten gegenüber herkömmlichen Spiegeln verwirklichbar. Dabei ist es bei gebogenen Spiegeln, insbesondere Parabolspiegeln, verfahrensmäßig besonders vorteilhaft, auf den noch planen Glasträger erfindungsgemäß zunächst eine metallische Vorschicht aufzubringen, den beschichteten Glasträger dann unter Oxidation des Metalls zum Dielektrikum zu biegen und schließlich die Versilberung vorzunehmen, da das Aufbringen metallischer Schichten einfacher und mit höherer Rate als das Aufbringen metalloxidischer Schicht durchführbar ist. Die so erhaltenen dielektrischen Schichten sind darüber hinaus alterungsbeständiger als Schichten gleichen Aufbaus, die nicht wärmebehandelt wurden.

Die erfindungsgemäße Verwendung von beanspruchten Spiegeln für solarchemische Anwendungen verleiht diesen Spiegeln einen ganz besonderen Vorteil gegenüber Spiegeln nach dem Stand der Technik, da es - wie oben geschildert - bei diesen Anwendungen auf die hochenergetische Solarstrahlung im nahen UV-Bereich ganz besonders ankommt, der Wirkungsgrad einer mit erfindungsgemäßen Spiegeln ausgestatteten solarchemischen Anlage zur Nutzung der Sonnenenergie also ganz besonders gesteigert wird.

Die Erfindung wird im folgenden anhand der Figuren erläutert. Es zeigen:
- Fig. 1: die schnittbildliche Darstellung einer Ausführungsform des erfindungsgemäßen Spiegels,
- Fig. 2: den spektralen Verlauf des Reflexionsgrads eines Spiegels nach der Erfindung sowie eines gattungsgemäßen Spiegels im nahen UV-Bereich und
- Fig. 3: eine Darstellung entsprechend Fig. 2 für den bis 2 500 nm erweiterten Spektralbereich.

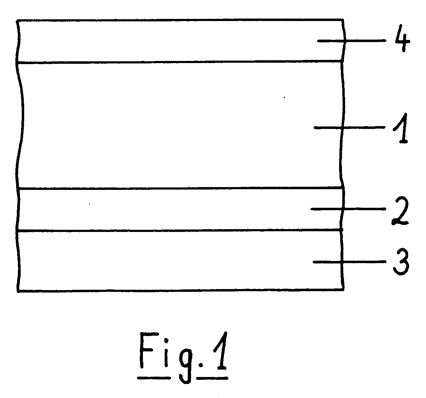

Der in Fig. 1 dargestellte Spiegel besteht aus einem Träger 1 aus absorptionsarmem Flachglas, insbesondere aus eisenreduziertem Flachglas, sogenanntem Weißglas. Die Dicke des Trägers 1 beträgt üblicherweise einige Millimeter. Der Träger 1 kann bei Bedarf chemisch oder thermisch vorgespannt sein. Soll der Spiegel die Sonnenstrahlung bündeln, so kann der Träger 1 beispielsweise parabolförmig gebogen sein.

Auf der der Sonne abgewandten Rückseite des Trägers 1 befindet sich eine lichtundurchlässige Reflexionsschicht 2 aus Silber, die von einer Schutzbeschichtung 3 abgedeckt ist. Die Reflexionsschicht 2 wird in der Regel aus Wirtschaftlichkeitsgründen naßchemisch aufgebracht. Es ist jedoch auch möglich, sie mittels anderer Beschichtungsverfahren herzustellen. Zur Erzielung eines möglichst hohen Reflexionsgrades im sichtbaren und infraroten Spektralbereich besteht die Reflexionsschicht 2 aus Silber, dem gegebenenfalls geringfügige Mengen anderer Metalle zugesetzt sein können.

Die Schutzbeschichtung 3 wird in der Regel von einer ersten Schicht aus Kupfer und einer zweiten Schicht aus einem Lack gebildet.

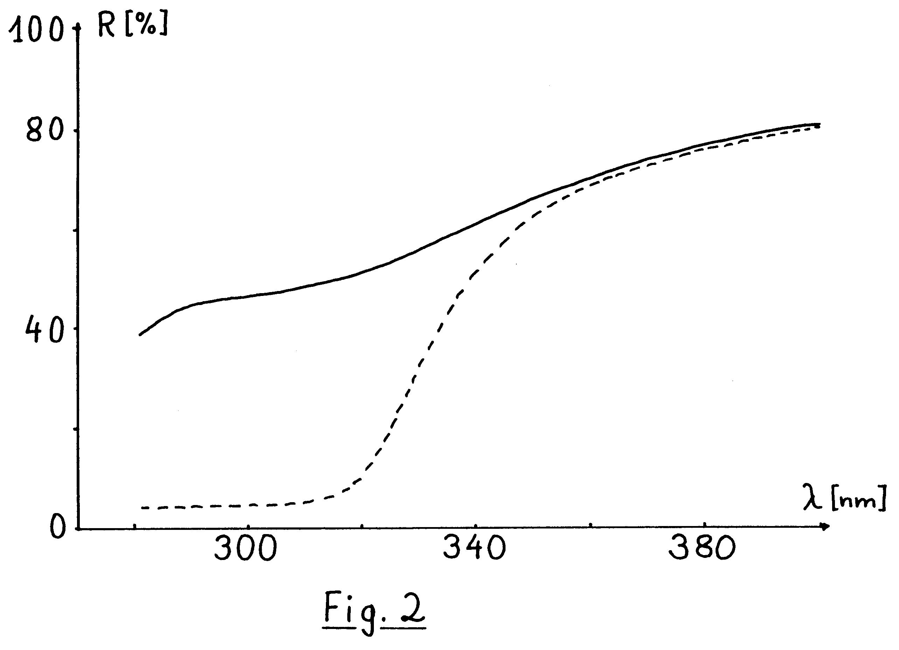

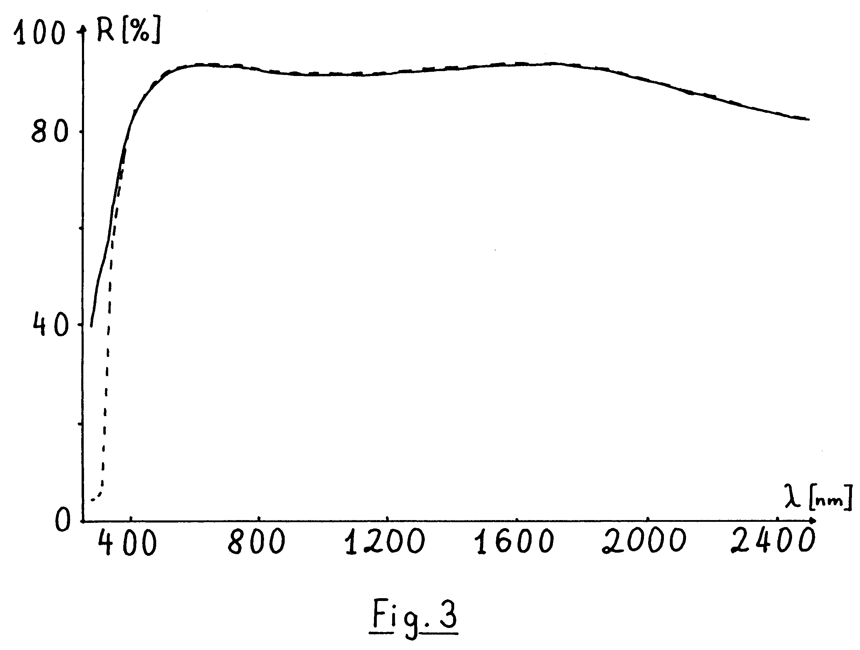

Der spektrale Verlauf des Reflexionsgrads eines solchen Spiegels ist in den Fig. 2 und 3 als punktierte Kurve dargestellt. Dabei zeigt Fig. 2 den für die Anwendung der Erfindung besonders wichtigen nahen UV-Bereich, während Fig. 3 praktisch den gesamten für die Sonnenenergienutzung bedeutsamen Spektralbereich vom UV- bis zum IR-Bereich erfaßt.

Die Figuren 2 und 3 lassen erkennen, daß der Reflexionsgrad eines derartigen Spiegels nahezu im gesamten sichtbaren und IR-Bereich oberhalb von 80 %, meist sogar über 90 % liegt. Im Bereich unterhalb von etwa 500 um fällt mit abnehmender Wellenlänge der Reflexionsgrad stark bis auf unter 10 % unterhalb von etwa 320 nm stark ab. Diese drastische Abnahme des Reflexionsgrads rührt von Absorptionen sowohl im Glas des Trägers 1 als auch in der Silberschicht 2 her, die insoweit einen korrelierenden Spektralverlauf aufweisen, was an sich für die Nutzung der Sonnenenergie im Sinne einer Optimierung durchaus erwünscht ist.

Der nachteilige praktisch vollständige Ausfall der Reflexion von Sonnenenergie im hochenergetischen nahen UV-Bereich wird nach der Erfindung dadurch behoben, daß auf der der Sonne zugewandten Vorderseite des Trägers 1 eine zusätzliche UV-Reflexionsschicht 4 angeordnet wird. Diese Schicht besteht aus einem hochbrechenden Dielektrikum und hat eine solche Dicke, daß sie als reflexionserhöhende Interferenzschicht für den nahen UV-Bereich wirkt. Als Dielektrikum kommen insbesondere Materialien mit einem Brechungsindex im nahen UV-Bereich von mindestens 2,5, vorzugsweise mindestens 3,0, zum Einsatz. Als besonders geeignet haben sich trotz einer mit abnehmender Wellenlänge zunehmenden Absorption Schichten aus TiO₂ erwiesen. Die optische Dicke der UV-Reflexionsschicht beträgt unter Berücksichtigung von Phasenwechseln an den beteiligten Grenzflächen vorzugsweise eine Viertelwellenlänge mit der Bezugswellenlänge von etwa 290 nm.

Der spektrale Verlauf des Reflexionsgrads eines erfindungsgemäßen Spiegels ist in den Figuren 2 und 3 als durchgezogene Kurve dargestellt. Vor allem in Figur 2 ist die Erhöhung des Reflexionsgrades im nahen UV-Bereich im Vergleich zum gattungsgemäßen Spiegel deutlich erkennbar. So wird der UV-Reflexionsgrad im Bereich von 280 - 340 nm von 32 % auf 54 % erhöht, wenn erfindungsgemäß eine UV-Reflexionsschicht 4 aus TiO₂ auf der Spiegelvorderseite angebracht wird. Im Bereich von 280 - 320 nm ist die Wirkung der UV-Reflexionsschicht 4 (Erhöhung von etwa 5 % auf etwa 43 %) noch drastischer.

Auch der gesamte solare Reflexionsgrad, gemessen nach der CIE-Norm, nimmt von bereits äußerst hohen 91 % auf 92 % zu, wenn erfindungsgemäß vorgegangen wird. Daß die zusätzliche Schicht nicht zu unerwünschten Einbußen in anderen Spektralbereichen führt, zeigt Fig. 3. Danach stimmt der spektrale Verlauf des Reflexionsgrads eines erfindungsgemäßen Spiegels mit demjenigen des herkömmlichen Spiegels oberhalb von etwa 360 nm praktisch völlig überein.

Im folgenden Ausführungsbeispiel wird der Spiegel nach der Erfindung sowie ein bevorzugtes Herstellungsverfahren weiter erläutert.

### Beispiel

Auf eine 40 cm · 40 cm große plane Floatglasscheibe aus eisenarmem Glas (Weißglas) der Dicke 4 mm wurde in einer Magnetron-Kathodenzerstäubungsanlage zunächst eine metallische Vorschicht aus Titan in einer Dicke von 14 nm durch Zerstäuben eines Titan-Targets in einer Argon-Atmosphäre von 2 · 10⁻³ mbar aufgebracht.

Die beschichtete Glasscheibe wurde danach in einem Wärmebehandlungsofen an Luft bei etwa 650 °C für 10 Minuten getempert. Diese Wärmebehandlung entspricht in etwa den thermischen Bedingungen, die beim Biegen von Parabolspiegel-Glasscheiben auftreten. Die Titanschicht oxidierte während dieser Behandlung vollständig zu TiO₂ auf. Die Dicke der so entstandenen Schicht 4 lag bei 24 nm.

Im Anschluß daran wurde in bekannter Weise die Rückseite der Glasscheibe 1 auf naßchemischem Wege mit einer Silber-Reflexionsschicht 2 versehen, die anschließend mit einer zweilagigen Cu-Lack-Schutzbeschichtung 3 abgedeckt wurde.

Der so fertiggestellte Spiegel verfügte über eine hohe Kratzfestigkeit und Feuchtraumbeständigkeit. Der Reflexionsgrad des Spiegels im nahen UV-Bereich, nämlich zwischen 280 und 340 nm, betrug 54 %, der gesamte solare Reflexionsgrad lag bei 92 %. Damit war der Spiegel besonders gut geeignet zur Verwendung in Anlagen für die Nutzung der Sonnenenergie mittels chemischer Umwandlungsprozesse. 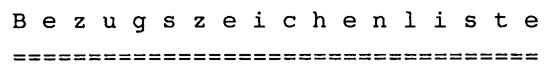
- 1:: Träger
- 2:: Silber-Reflexionsschicht
- 3:: Schutzbeschichtung
- 4:: UV-Reflexionsschicht

## Patentansprüche

1. Spiegel für Anlagen zur Nutzung der Sonnenenergie, mit einem Träger aus absorptionsarmem Flachglas und einer rückseitigen hochreflektierenden Silber-Reflexionsschicht, die mit einer Schutzbeschichtung versehen ist,
dadurch gekennzeichnet, daß
der Träger (1) auf seiner Vorderseite mit einer hochbrechenden dielektrischen UV-Reflexionsschicht (4) mit einer solchen Dicke versehen ist, daß sie als reflexionserhöhende Interferenzschicht für den nahen UV-Bereich wirkt.

2. Spiegel nach Anspruch 1, dadurch gekennzeichnet, daß die UV-Reflexionsschicht (4) einen Brechungsindex im nahen UV-Bereich von mindestens 2,5, vorzugsweise mindestens 3,0, aufweist.

3. Spiegel nach einem der vorangehenden Ansprüche, dadurch gekennzeichnet, daß die UV-Reflexionsschicht (4) als Viertelwellenlängenschicht für eine Wellenlänge von etwa 290 nm eingerichtet ist.

4. Spiegel nach einem der vorangehenden Ansprüche, dadurch gekennzeichnet, daß die UV-Reflexionsschicht (4) aus einem Dielektrikum besteht, das im Wellenlängenbereich von etwa 400 bis 2 500 nm praktisch absorptionsfrei ist.

5. Spiegel nach einem der vorangehenden Ansprüche, dadurch gekennzeichnet, daß die UV-Reflexionsschicht (4) einen überwiegenden Gehalt an TiO₂ aufweist.

6. Spiegel nach einem der vorangehenden Anprüche, dadurch gekennzeichnet, daß die UV-Reflexionsschicht (4) mittels Magnetron-Kathodenzerstäubung aufgebracht wurde.

7. Verfahren zur Herstellung eines Spiegels mit einem gebogenen Träger (1) nach einem der vorangehenden Ansprüche, gekennzeichnet durch die folgenden Herstellungsschritte:
(a) Auf die Vorderseite des planen Trägers (1) wird eine metallische Vorschicht aufgebracht,
(b) der mit der metallischen Vorschicht versehene Träger (1) wird in sauerstoffhaltiger Atmosphäre gebogen, wobei die Vorschicht zu der dielektrischen UV-Reflexionsschicht (4) aufoxidiert,
(c) auf die Rückseite des gebogenen Trägers (1) wird die Silber-Reflexionsschicht (2) sowie die Schutzbeschichtung (3) aufgebracht.

8. Verfahren nach Anspruch 7, dadurch gekennzeichnet, daß das Aufbringen der metallischen Vorschicht mittels Vakuumbeschichtung erfolgt.

9. Verfahren nach Anspruch 8, dadurch gekennzeichnet, daß die Vorschicht mittels Magnetron-Kathodenzerstäubung aufgebracht wird.

10. Verwendung des Spiegels nach einem der Ansprüche 1 - 6 für die Nutzung der Sonnenenergie mittels chemischer Umwandlungsprozesse.
